# EUROPEAN PATENT SPECIFICATION

(11) **EP 2 161 189 B1**
(45) Date of publication and mention of the grant of the patent: **22.02.2012**
(21) Application number: 09011286.3
(22) Date of filing: 02.09.2009
(51) Int. Cl.: B62K 11/04, F01N 13/04, F01N 13/08

(54) **Motorcycle**
Motorrad
Motocyclette

(30) Priority: 05.09.2008 JP 2008229097
(43) Date of publication of application: 10.03.2010
(73) Proprietor: Yamaha Hatsudoki Kabushiki Kaisha, Shizuoka-ken 438-8501 (JP)
(72) Inventor: Nagayama, Jun, Iwata-shi Shizuoka-ken 438-8501 (JP); Takahiro, Sumi, Iwata-shi Shizuoka-ken 438-8501 (JP)
(74) Representative: Grünecker, Kinkeldey, Stockmair & Schwanhäusser

(56) References cited:
- JP-A- 2003 074 337
- JP-A- 2006 037 840
- Motociclismo: "Prova Ducati 1098" INTERNET CITATION 14 February 2007 (2007-02-14), XP007911246 Retrieved from the Internet: URL:http://www.motociclismo.it/edisport/mo to/MotoCiclismoR2.nsf/gd/Prova- Ducati-1098-1-La-moto> [retrieved on 2010-01-20]

## Description

The present invention relates to a motorcycle.

Japanese Patent No. 3939945 describes a motorcycle including a rear wheel provided swingably to a vehicle body, an exhaust pipe extending rearward from an engine provided forward to the rear wheel, and a pair of mufflers connected to the exhaust pipe and provided side by side in a left-right direction.

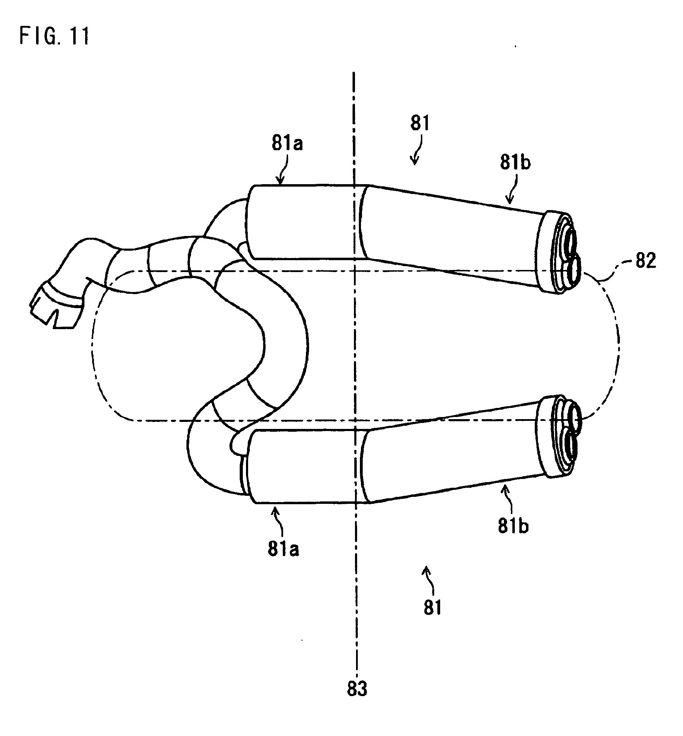

FIG. 11 is a plan view of a rear portion of the vehicle body of the motorcycle described in Japanese Patent No. 3939945. As shown in FIG. 11, as seen in the plan view, a pair of mufflers 81 are located in the state where front portions thereof are distanced from a rear wheel 82 so as to avoid interference with the rear wheel 82 and where portions rearward to an axle 83 are bent toward the vehicle-width wise center. Therefore, the mufflers 81 are lengthy in a front-rear direction and are located away from the engine. Because the mufflers 81 are relatively heavy components, there is an undesirable possibility that the concentration of the vehicle mass is prevented. Herein, "concentration of vehicle mass" refers to locating heavy components of the motorcycle as close as possible to the center of gravity thereof so as to concentrate the vehicle mass at a position close to the center of gravity and thus to reduce the moment of inertia of the vehicle. The present invention is made in light of such circumstances.

The document http://www.motociclismo.it/edisport/moto/MotoCiclismoR2.nsf/gd/ Prova-Ducati-1098-1La-moto discloses a motorcycle comprising a vehicle body swingably supporting a rear wheel and an engine having exhaust pipes extending in a moving direction of the motorcycle. The rear ends of the exhaust pipes and the mufflers are connected. Each muffler is inclined obliquely upward and rearward such that a bottom end of a rear end portion of said muffler is located at a higher level than a bottom end of a front portion of the muffler. Each muffler includes a front portion located in motorcycle moving direction forward of an axle supporting the rear wheel, wherein a part of the front portion overlaps a part of the rear wheel. Each muffler is provided with an oval cross section.

The document JP 2006- 037840 A discloses a motorcycle comprising a vehicle body supporting a rear wheel and an engine. An exhaust pipe extends in the moving direction of the motorcycle rearward from said engine. A muffler is connected to a rear end of the exhaust pipe. The muffler is inclined obliquely upward and rearward and is disposed above the rear wheel.

It is an objective of the present invention to provide a motorcycle with at least one muffler so as to improve the concentration of vehicle mass.

According to the present invention said object is solved by a motorcycle having the features of independent claim 1. Preferred embodiments are laid down in the dependent claims.

Accordingly, it is provided a motorcycle comprising a vehicle body by which a rear wheel having an axle is swingably supported, an engine provided in motorcycle moving direction forward of the rear wheel, wherein an exhaust pipe extends in motorcycle moving direction rearward from said engine, and at least one muffler connected to a rear end of the exhaust pipe, wherein the muffler is inclined obliquely upward and rearward such that a bottom end of a rear end portion of said muffler is located at a higher level than a bottom end of a front end portion of said muffler, and as seen in plan view, the muffler includes a front portion located in motorcycle moving direction forward of the axle, and at least a part of said front portion overlaps a part of the rear wheel.

According to a preferred embodiment, a pair of mufflers is connected to the rear end of the exhaust pipe and is provided side by side in width direction of the motorcycle, wherein each of said left and right mufflers is inclined obliquely upward and rearward such that the bottom end of the rear end portion of each muffler is located at a higher level than the bottom end of the front end portion of each muffler, and as seen in a plan view, each muffler includes a front portion located in motorcycle moving direction forward of the axle, and at least a part of each front portion overlaps a part of the rear wheel.

Accordingly, each muffler inclines obliquely upward and rearward. As seen in a plan view, at least a part of the front portion of each muffler is located at a position overlapping the rear wheel. Namely, at least a part of the front portion overlaps the rear wheel as seen in the plan view while avoiding interfering with the rear wheel. Therefore, the width of each muffler can be increased while interference between each muffler and the rear wheel is avoided. In addition, the width of each muffler can be increased while each muffler is prevented from projecting vehicle-width wise outward. This can increase the cross-sectional area of each muffler. By increasing the cross-sectional area of each muffler, the length of each muffler in the front-rear direction can be decreased. Accordingly, in a motorcycle including a pair of left and right mufflers provided above the rear wheel, the concentration of vehicle mass can also be improved as compared to the conventional art.

The rear wheel has a convex outer circumferential surface, the muffler has a generally triangular lateral cross-section, and, preferably, a surface of the muffler facing the rear wheel is slanted in width direction outward toward a bottom end of the muffler.

Further, a center position of the muffler is located in motorcycle moving direction forward of the axle.

Still further, preferably a width of the rear end portion of each muffler is wider than a space between the rear end portion of the left muffler and the rear end portion of the right muffler.

Yet further still, preferably a width of the front end portion of each muffler is wider than 1/2 of a space between the front end portion of the left muffler and the front end portion of the right muffler.

According to a preferred embodiment, a phantom line in a direction in which the right muffler extends and a phantom line in a direction in which the left muffler extends cross each other at a position in motorcycle moving direction rearward of the rear ends of the mufflers.

A rear frame supports the at least one muffler, at least a part of a rear portion of the rear frame is located above the rear wheel, a rear seat is provided above the rear frame, and a center position of the muffler is located in motorcycle moving direction forward of a center position of the rear seat.

Further, preferably a taillight is provided below the rear seat, at least a part of the taillight overlaps the rear end portion of the muffler as seen in a side view, the rear end of the muffler is located in motorcycle moving direction forward of a rear end of the rear seat, and/or a rear end of the taillight is located in motorcycle moving direction forward of the rear end of the rear seat, and/or a front end of the taillight is located in motorcycle moving direction forward of the rear end of the muffler.

Still further, preferably a protector is provided in width direction outward of the corresponding muffler so as to partially cover a side portion and/or a top portion of the corresponding muffler.

Yet further still, preferably a rear frame supports the at least one muffler, at least a part of a rear portion of the rear frame is located above the rear wheel, and a part of the rear portion of the rear frame is generally flat.

In the following, the present invention is explained in greater detail by means of embodiments thereof in conjunction with the accompanying drawings, wherein:
- FIG. 1: is a side view of a motorcycle according to an embodiment;
- FIG. 2: is a side view showing the front-rear wise positional relationship of the axle of a rear wheel and a muffler, and a state where the rear wheel is swung upward;
- FIG. 3: is a side view showing the front-rear wise positional relationship of the muffler, a taillight and a rear seat;
- FIG. 4: is a plan view of an exhaust pipe, the muffler and the rear wheel;
- FIG. 5: is a perspective view of the exhaust pipe, the muffler, the taillight and the like as seen obliquely from the rear and bottom side thereof.
- FIG. 6: shows cross-sections of the mufflers as seen from the rear side thereof; FIG. 6(a) is a cross-sectional view of FIG. 2 taken along line A-A, and FIG. 6(b) is a cross-sectional view of FIG. 2 taken along line B-B;
- FIG. 7: is a cross-sectional view of FIG. 2 taken along line B-B, which shows a state where the rear wheel is swung upward;
- FIG. 8: is a side view of a rear portion of a rear frame;
- FIG. 9: shows cross-sectional views of the rear frame; FIG. 9(a) is a cross-sectional view of FIG. 8 taken along line D-D, and FIG. 9(b) is a cross-sectional view of FIG. 8 taken along line C-C;
- FIG. 10: shows perspective views of a protector attached to the left side of the vehicle body; FIG. 10(a) is a view as seen from the left side thereof, and FIG. 10(b) is a view as seen from the bottom side thereof; and
- FIG. 11: is a plan view showing a rear wheel and mufflers of a conventional motorcycle.

Among others, the following reference signs are used in the drawings:
- 3c: Rear frame
- 3c_{E}: Rear end portion (a part of a rear portion of the rear frame)
- 8: Exhaust pipe
- 9a: Front end portion
- 9b: Rear end portion
- 12: Rear wheel
- 14: Rear seat
- 16: Protector
- 17: Taillight
- 50: Engine
- 91: Left muffler
- 92: Right muffler
- 91c, 92c: Front portion of the muffler
- C: Axle of the rear wheel

Although the following description refers to a particularly preferred embodiment of a motorcycle having a pair of mufflers, namely a left and a right muffler provided above a rear wheel, the technical teaching is also applicable to motorcycles having a single muffler which is either provided on the left side or the right side. Thus, the following explanations referring to a pair of mufflers are not limited to the pair of mufflers, but are also valid for a single muffler.

In a motorcycle including a pair of left and right mufflers provided above a rear wheel, the space between the rear wheel and each muffler is narrowest when the rear wheel is swung upward to the uppermost position thereof. If each muffler is inclined obliquely upward and rearward, a portion of each muffler forward to the axle of the rear wheel as seen in the plan view is closest to the rear wheel. Forming the mufflers to be thicker and shorter is preferable in order to realize the concentration of vehicle mass.

An outer circumferential surface of a tire used for the rear wheel is convexed outward in a radial direction of the rear wheel. Even if a front portion of each muffler is located to overlap the rear wheel as seen in the plan view, each muffler and the rear wheel can be prevented from interfering with each other by utilizing such a shape of the tire. Namely, by considering the size of the space between the front portion of each muffler and the rear wheel, it is made possible to form the mufflers to be thicker and shorter and thus to use a space above the rear wheel.

From this point of view, improving the concentration of vehicle mass as compared to the conventional art is achieved by the embodiment as will be described in the following.

Now, an embodiment of a motorcycle will be described by way of drawings. In the following description, the directions of "front", "rear", "left", "right" and the like refer to the respective directions as seen from a rider sitting on a seat 13, unless otherwise specified. In particular, a left-right direction represents a width direction of the motorcycle, and a front-rear direction represents a moving direction of the motorcycle.

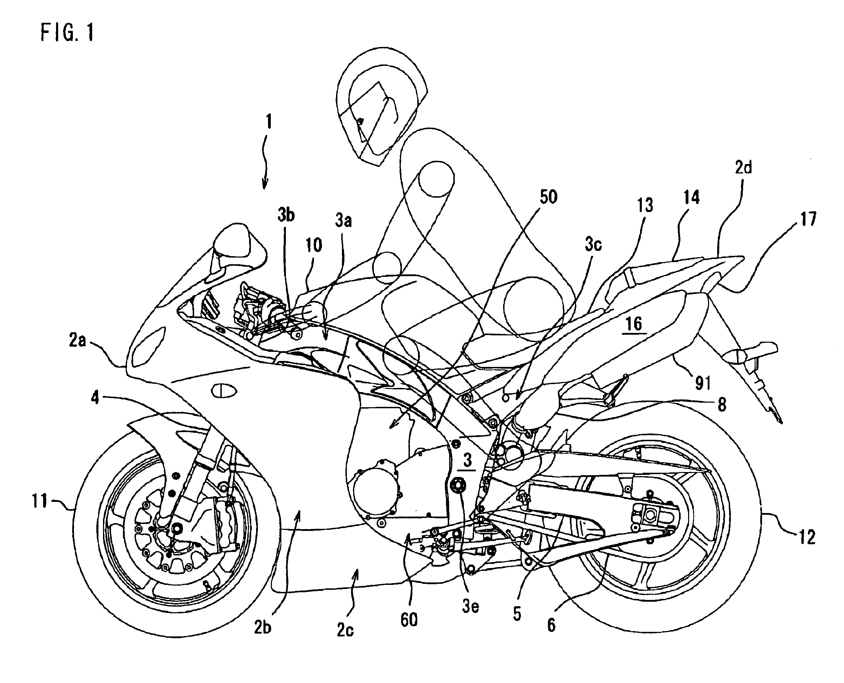

FIG. 1 is a left side view of a motorcycle 1 according to this embodiment. The motorcycle 1 includes a body frame 3. The body frame 3 includes a pair of left and right main frames 3a, a head pipe 3b, and a rear frame 3c. The main frames 3a each include a portion extending in the front-rear direction and a portion extending in an up-down direction. The head pipe 3b is connected forward to the main frames 3a. The rear frame 3c extends obliquely upward and rearward, from rear ends of the portions of the main frame 3a extending in the front-rear direction. The main frames 3 each have a pivot 3e. To the pivot 3e, a rear arm 5 is attached. When the rider is on, but is not running, the motorcycle 1, the rear arm 5 extends generally horizontally. At a rear end of the rear arm 5, a rear wheel 12 is rotatably attached, and the rear wheel 12 and the rear arm 5 can swing around the pivot 3e as the center of swing. Below the head pipe 3b, a front suspension 4 is provided. At a bottom end of the front suspension 4, a front tire 11 is rotatably attached.

The motorcycle 1 includes a power unit 60 having an engine 50 and the like. The power unit 60 is supported by at least the left and right main frames 3a. An output from the power unit 60 is transmitted to the rear wheel 12 via a power transmission mechanism 6. The power transmission mechanism 6 is formed of, for example, a chain. Alternatively, the power transmission mechanism 6 may be a rubber belt or a shaft drive. A part of the power unit 60 is covered with a side cowling 2b or an under cowling 2c. The motorcycle 1 has a head cowling 2a.

A fuel tank 10 and the seat 13 are located in an upper part of the vehicle. A part of the fuel tank 10 is placed on the main frames 3a. A part of the seat 13 is placed on the rear frame 3c. The fuel tank 10 is located forward to the seat 13. Rearward to the seat 13, a rear seat 14 is provided. The rear seat 14 is placed above the rear frame 3c.

Although not shown, an air cleaner is provided below the fuel tank 10. The air cleaner is not limited to being located at this position and may be located, for example, below the seat 13. Air which is cleaned by the air cleaner and fuel stored in the fuel tank 10 are supplied to the engine 50 and combusted inside the engine 50. The combusted air and fuel pass through exhaust pipes 8 and are discharged outside the vehicle body as exhaust gas. The exhaust pipes 8 are provided as a pair of left and right exhaust pipes 8 and connected forward to the engine 50. The exhaust pipes 8 are not limited to being located at this position and may be connected rearward to the engine 50. Each exhaust pipe 8 extends in the front-rear direction. At rear ends of the exhaust pipes 8, a pair of left and right mufflers 91 and 92 are respectively connected. The mufflers 91 and 92 extend in the front-rear direction.

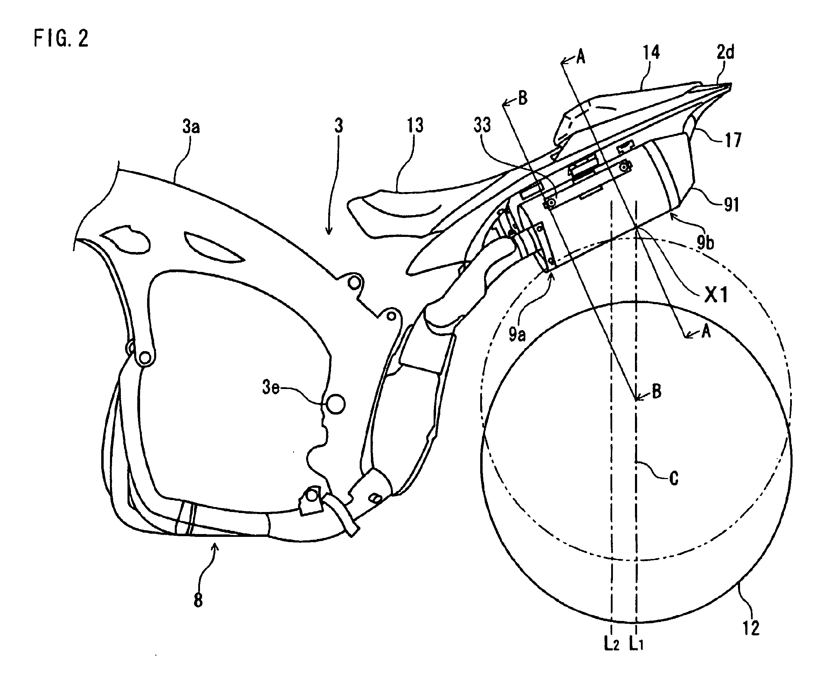

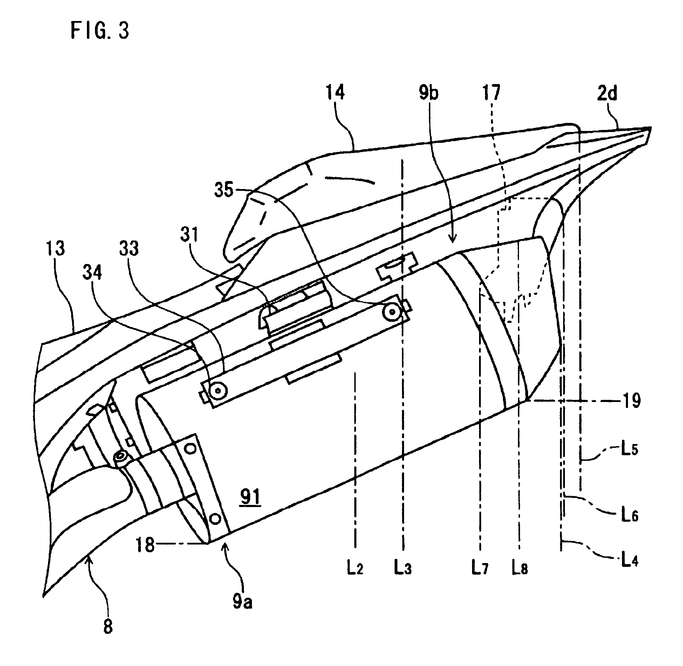

The mufflers 91 and 92 are located and shaped bilaterally symmetrically. In the following, the shape of only the left muffler 91 will be described, and the description on the shape of the right muffler 92 will be omitted. As shown in FIG. 2, the muffler 91 inclines upward and rearward obliquely. In FIG. 3, reference numeral 18 represents a bottom end of a front end portion 9a of the muffler 91, and reference numeral 19 represents a bottom end of a rear end portion 9b of the muffler 91. As shown in FIG. 3, the bottom end 19 of the rear end portion 9b is at a higher level than the bottom end 18 of the front end portion 9a. At least a part of the muffler 91 is always kept above the rear wheel 12. Where the rear arm 5 extends generally horizontally, i.e., when the rider is on, but is not running, the motorcycle 1, the muffler 91 is entirely above the rear wheel 12. As described later, when the rear wheel 12 is swung upward around the pivot 3e as the center of swing, an upper end of the rear wheel 12 moves above the bottom end 18 of the muffler 91.

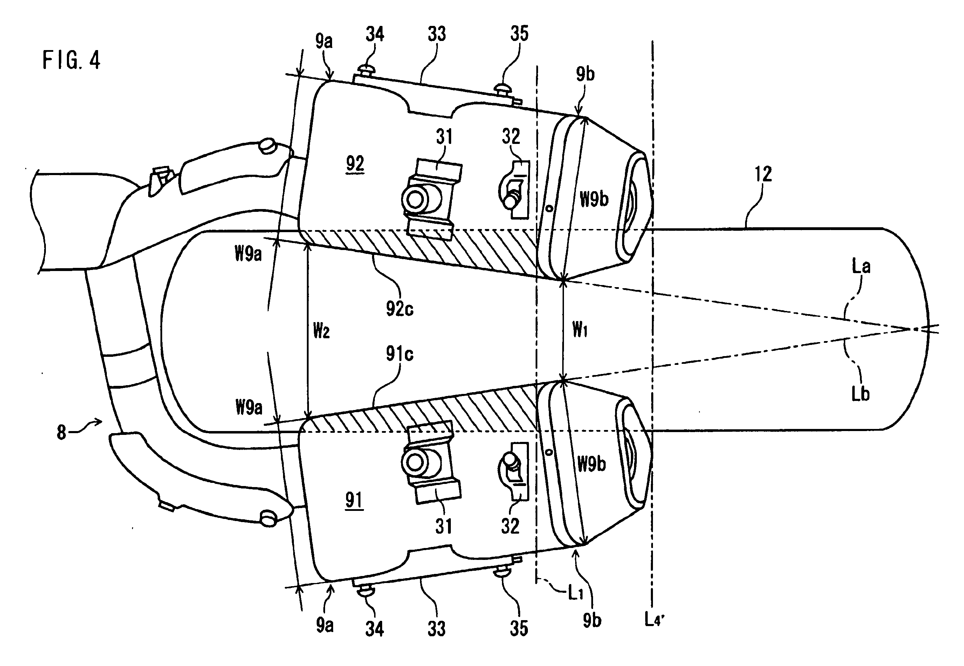

The muffler 91 is supported by the rear frame 3c. The muffler 91 is attached to the rear frame 3c via a plurality of brackets 31 and 32 (see FIG. 4). The rear frame 3c has a muffler attaching section not shown. The muffler 91 is supported by the rear frame 3c by the brackets 31 and 32 being fixed to the muffler attaching section. As shown in FIG. 1, the motorcycle 1 has a rear cowling 2d. The rear cowling 2d is located above the rear wheel 12. The rear cowling 2d is at least partially located below the rear seat 14 and covers the top and sides of a rear portion of the rear frame 3c and the top of the muffler 91. Below the rear seat 14, protectors 16 are provided. The protectors 16 partially cover the sides and top of the mufflers 91 and 92.

The motorcycle 1 includes the rear seat 14. The rear seat 14 is provided rearward to the seat 13 and above the rear frame 3c. The motorcycle 1 also includes a taillight 17. The taillight 17 is provided at a rear end of the rear cowling 2d and is visible from the rear and sides of the vehicle body.

In FIG. 2, line L₁ is a vertical line passing the axle C of the rear wheel 12, and line L₂ is a vertical line passing the center position of the muffler 91 in the front-rear direction. The vertical line L₂ is located forward to the vertical line L₁. Namely, as seen in the side view, the center position of the muffler 91 in the front-rear direction is located forward to the axle C of the rear wheel 12.

In FIG. 3, line L₃ is a vertical line passing the center position of the rear seat 14 in the front-rear direction. The vertical line L₂ is located forward to the vertical line L₃. Namely, as seen in the side view, the center position of the muffler 91 in the front-rear direction is located forward to the center position of the rear seat 14 in the front-rear direction.

Line L₄ is a vertical line passing the rear end of the muffler 91, line L₅ is a vertical line passing a rear end of the rear seat 14, and line L₆ is a vertical line passing a rear end of the taillight 17. Line L₇ is a vertical line passing a front end of the taillight 17, and line L₈ is a vertical line passing the center position of the taillight 17 in the front-rear direction. The vertical line L₄ is located forward to the vertical line L₅. Namely, the rear end of the muffler 91 is located forward to the rear end of the rear seat 14. The vertical line L₆ is located forward to the vertical line L₅. Namely, the rear end of the taillight 17 is located forward to the rear end of the rear seat 14. The vertical line L₇ is located forward to the vertical line L₄. Namely, the front end of the taillight 17 is located forward to the rear end of the muffler 91. The vertical line L₈ is located forward to the vertical line L₅. Namely, the center position of the taillight 17 in the front-rear direction is located forward to the rear end of the rear seat 14.

As shown in FIG. 4, as seen in the plan view, the mufflers 91 and 92 each have a portion located forward to the axle (see FIG. 2) of the rear wheel 12. Here, such portions will be referred to as "front portion 91c, 92c" for the sake of convenience. The front portions 91 c and 92c partially overlap the rear wheel 12 as seen in the plan view. In FIG. 4, portions of the front portions 91 c and 92c overlapping the rear wheel 12 are hatched. As shown in FIG. 4, vehicle-width wise inner portions of the mufflers 91 and 92 overlap vehicle-width wise outer portions of the rear wheel 12.

As seen in the plan view, the mufflers 91 and 92 are inclined vehicle-width wise outward toward a front end thereof. As seen in the plan view, the space between the left muffler 91 and the right muffler 92 is different at the front end portions 9a of the mufflers 91 and 92 from at the rear end portions 9b of the mufflers 91 and 92. The space between the rear end portions 9b has a minimum width W₁ between the left muffler 91 and the right muffler 92, and the space between the front end portions 9a has a maximum width W₂ between the left muffler 91 and the right muffler 92. Therefore, phantom line La in the direction in which the right muffler 92 extends and phantom line Lb in the direction in which the left muffler 91 extends cross each other at a position rearward to the rear ends of the mufflers 91 and 92. FIG. 4 shows line L₄' perpendicularly crossing the vertical line L₄ shown in FIG. 3. The line L₄' represents the rear ends of the mufflers 91 and 92.

Now, the width of the mufflers 91 and 92 will be described. Here, the left muffler 91 will be described, and the description on the right muffler 92 will be omitted. Width W9b of the rear end 9b of the muffler 91 is wider than the space between the rear end portion 9b of the left muffler 91 and the rear end portion 9b of the right muffler 92 (i.e., the minimum width W₁). Width W9a of the front end portion 9a of the muffler 91 is wider than 1/2 of the space between the front end portion 9a of the left muffler 91 and the front end portion 9a of the right muffler 92 (i.e., the maximum width W₂). The width of the muffler 91 may be the same from the front end portion 9a to the rear end portion 9b, or different at the front end portion 9a from at the rear end portion 9b. The width of the left muffler 91 may be different from the width of the right muffler 92. In this case, the width of a narrower muffler may be compared with the space between the left muffler 91 and the right muffler 92.

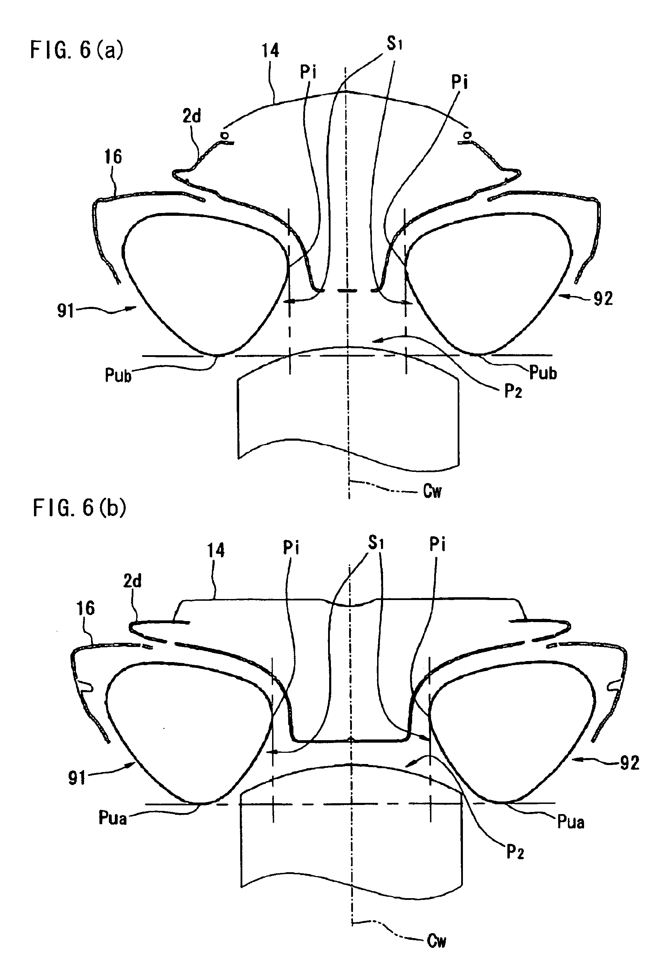

FIG. 6(a) is a cross-sectional view, as seen from the rear side, of FIG. 2 taken along line A-A. The cross-section taken along line A-A shown in FIG. 2 is the following cross-section. When the rear wheel 12 is swung, the vertical line L₁ representing the position of the axle C of the rear wheel 12 crosses the bottom end of the muffler 91 at the intersection X1 (see FIG. 2). The A-A cross-section is the lateral cross-section of the muffler 91 passing the intersection X1. If the muffler 91 extends horizontally rearward, the space between the rear wheel 12 and the muffler 91 is minimum at the A-A position.

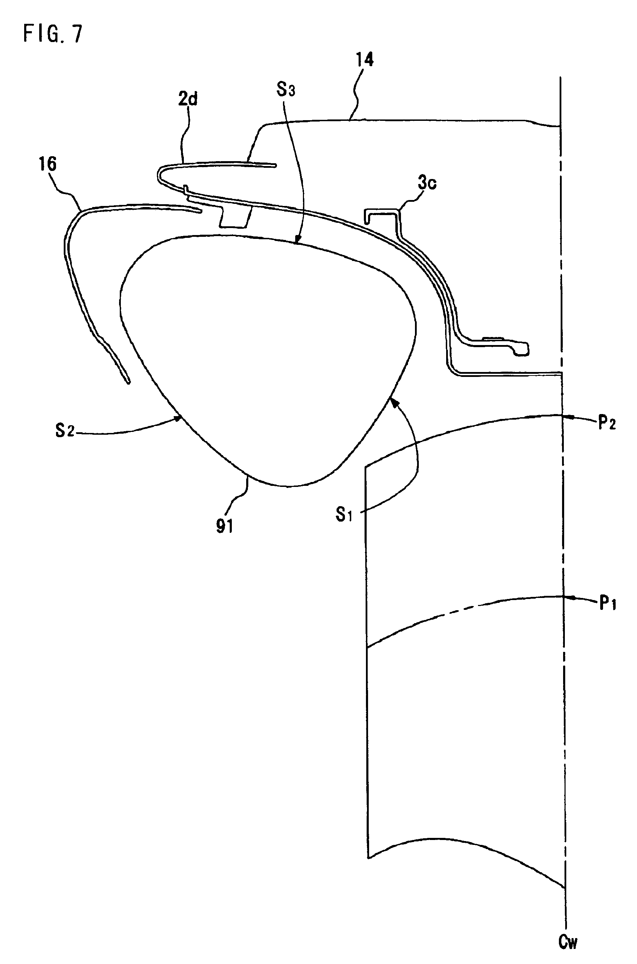

FIG. 6(b) and FIG. 7 each show a cross-sectional view, as seen from the rear side, of FIG. 2 taken along line B-B. When the rear wheel 12 is swung upward, the space between the rear wheel 12 and the muffler 91 is the minimum at the B-B position shown in FIG. 2. Namely, as shown in FIG. 2, in this embodiment, the muffler 91 is inclined upward and rearward obliquely. Therefore, when the rear wheel 12 is swung upward, the position at which the space between the rear wheel 12 and the muffler 91 is minimum is forward to the position of the axle C of the rear wheel 12. In the motorcycle 1 in this embodiment, when the rear wheel 12 is swung upward, a position of the muffler 91 at which the space between the rear wheel 12 and the muffler 91 is minimum is the front end portion 9a.

Precisely describing, when the rear wheel 12 is swung upward, the position of the axle C of the rear wheel 12 as seen in the side view moves forward slightly. However, such a positional moving of the axle C of the rear wheel 12 in the front-rear direction is very small and is ignored here.

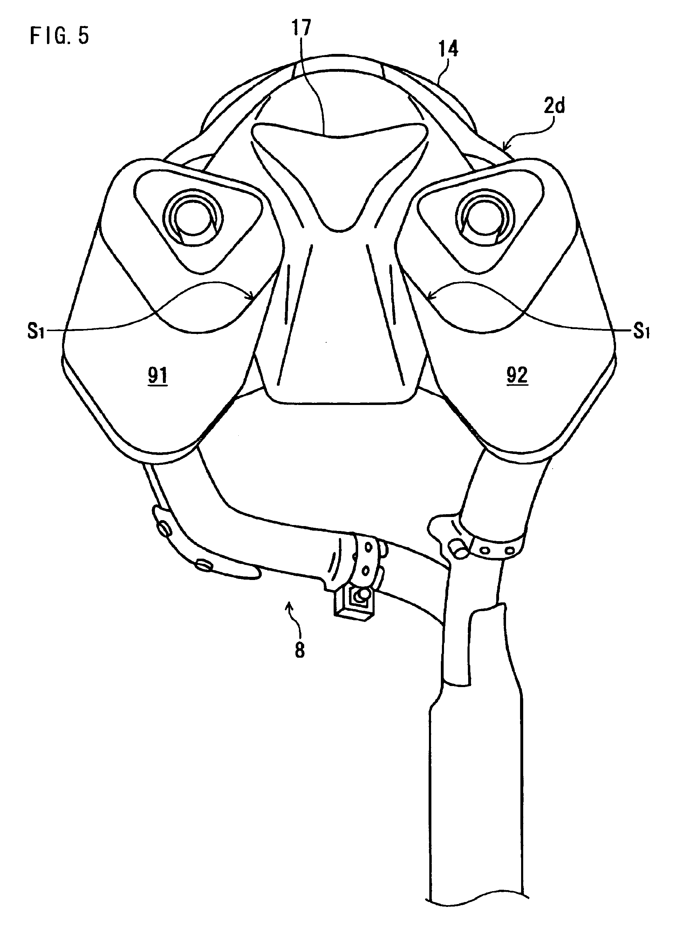

As shown in FIG. 5, FIG. 6 and FIG. 7, the lateral cross-section of the muffler 91 is generally triangular. The "lateral cross-section" means a cross-section in the direction perpendicular to the longitudinal direction. As shown in FIG. 7, the lateral cross-section of the muffler 91 has a first contour S₁ inclining vehicle-width wise inward toward an upper end thereof, a second contour S₂ provided vehicle-width wise outer to the first contour S₁ and inclining vehicle-width wise outward toward an upper end thereof, and a third contour S₃ provided above the first contour S₁ and the second contour S₂ and inclining vehicle-width wise outward toward an upper end thereof. A bottom end of the first contour S₁ is a bottom point Pu shown in FIG. 6(a) and FIG. 6(b). A top end of the first contour S₁ is an innermost point Pi shown in FIG. 6(a) and FIG. 6(b). Namely, the first contour S₁ is a side of the triangle connecting the bottom point Pu and the innermost point Pi. The first contour S₁ is a curve projecting vehicle-width wise inward from the straight line connecting the innermost point Pi and the bottom point Pu. By the first contour S₁ projecting vehicle-width wise inward from the straight line connecting the innermost point Pi and the bottom point Pu, the cross-sectional shape of the muffler 91 expands vehicle-width wise inward. It should be noted that the first outer contour S₁ may be the straight line connecting the innermost point Pi and the bottom point Pu. Alternatively, the first outer contour S₁ may be a curve projecting vehicle-width wise outward from the straight line connecting the innermost point Pi and the bottom point Pu. In this case, when the rear wheel 12 is swung upward, interference between the muffler 91 and the rear wheel 12 can be prevented more.

In this embodiment, the left muffler 91 and the right muffler 92 are located at the same position in the up-down direction. Alternatively, the left muffler 91 and the right muffler 92 may be located at different positions in the up-down direction.

As shown in FIG. 7, a top surface of the rear wheel 12 at the B-B position (i.e., at the front end portion 9a of the muffler 91) is represented by P₁ when no rider is on the motorcycle 1 or the motorcycle 1 is at a stop. When the motorcycle 1 is running, the rear wheel 12 is swung in the up-down direction. When the rear wheel 12 is swung upward to a predetermined height, the top surface of the rear wheel 12 is represented by P₂ in FIG. 7. The rear wheel 12 and the like are bilaterally symmetrical with respect to a vehicle-width wise center line Cw, and so FIG. 7 shows only the left half thereof. In general, outer circumferential surfaces of a rear wheel and a front wheel are formed to be convexed outward in the radial direction thereof. In other words, as seen from the front side and the rear side, the rear wheel and the front wheel are shaped to project toward the center from the outer sides in the left-right direction. Regarding the motorcycle 1 in this embodiment also, the rear wheel 12 and the front wheel 11 are shaped to be convexed toward the center from the outer sides in the left-right direction as seen from the front side and the rear side. As described above, the first contour S₁ is slanted with respect to the vertical direction, and inclines vehicle-width wise outward toward a lower end thereof. A surface of the muffler 91 facing the rear wheel 12 is slanted with respect to the vertical direction, and inclines vehicle-width wise outward toward a bottom end thereof. The muffler 91 is shaped so as to avoid contacting the rear wheel 12 as much as possible. Owing to this, even when the rear wheel 12 is swung upward, the rear wheel 12 is prevented from interfering with the muffler 91 with certainty.

As described above, the muffler 91 is inclined upward and rearward obliquely (see FIG. 3). Therefore, the front end portion 9a of the muffler 91 is more likely to interfere with the rear wheel 12 than the rear end portion 9b. As shown in FIG. 6(a), the top surface P₂ of the rear wheel 12 is located slightly above the bottom point Pub of the rear end portion 9b of the muffler 91, but this position is much higher than the bottom point Pua of the front end portion 9a of the muffler 91 shown in FIG. 6(b). However, the rear wheel 12 inclines downward toward a front end thereof, from the position just above the axle C, i.e., the position of the top surface P2. Therefore, a portion of the rear wheel 12 which is located below the front end portion 9a is below the top surface P2. Also as described above, the cross-section of the muffler 91 is generally inverted triangular, and the first contour S₁ inclines with respect to the vertical direction so as to conform to the shape of the rear wheel 12. Owing to this, as shown in FIG. 4, even where the width of the rear wheel 12 is wider than the maximum width W₂, the rear wheel 12 does not interfere with the front end portion 9a of the muffler 91. Regarding the space between the left muffler 91 and the right muffler 92, the space between the front end portions 9a is wider than the space between the rear end portions 9b. Owing to this, even when the rear wheel 12 is swung upward, the rear wheel 12 and the front end portion 9a of the muffler 91 are prevented from interfering with each other.

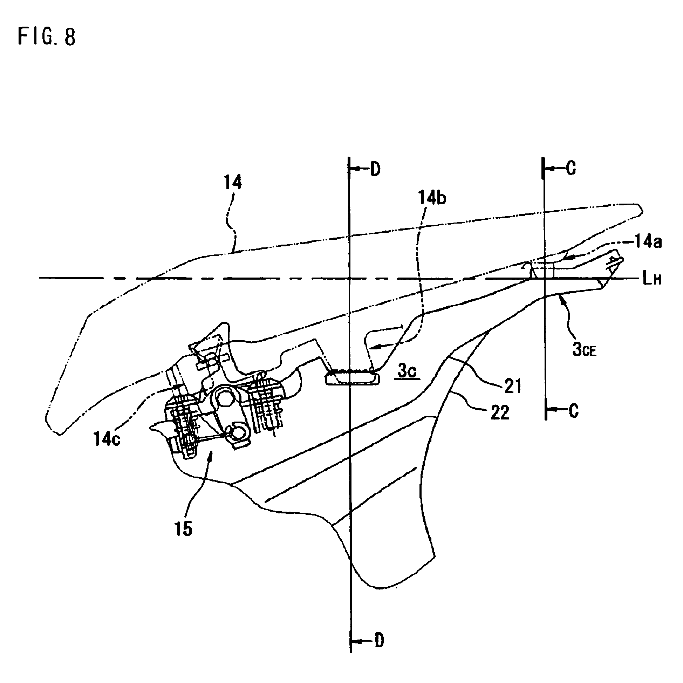

As shown in FIG. 8, the rear frame 3c extends obliquely upward and rearward. Above the rear frame 3c, the rear seat 14 is provided. The rear seat 14 has legs 14a, 14b and 14c. The leg 14a is provided in a rear portion of the rear seat 14. The legs 14b and 14c are provided forward to the leg 14a. Below the rear seat 14, a seat lock mechanism 15 is provided. By the seat lock mechanism 15 engaging the leg 14c, the rear seat 14 is fixed to the rear frame 3c.

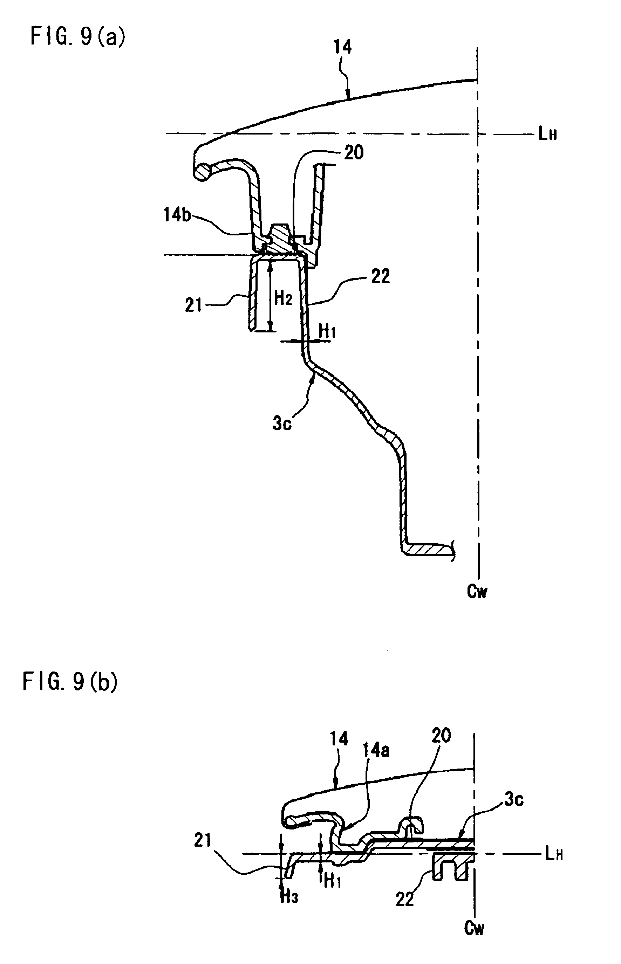

As shown in FIG. 9(a) and FIG. 9(b), a seal 20 is provided between the rear frame 3c and each leg. The rear seat 14 and the rear frame 3c contact each other with the seal 20 sandwiched therebetween. The rear frame 3c has a unique shape at a rear end portion 3c_{E} thereof (see FIG. 8). The rear end portion 3c_{E} is a portion of the rear frame 3c which contacts the leg 14a with the seal 20 sandwiched therebetween. The cross-section of FIG. 8 taken along line C-C is the vertical cross-section of the rear seat 14, the rear frame 3c and the like at the position of the leg 14a. The cross-section of FIG. 8 taken along line D-D is the vertical cross-section of the rear seat 14, the rear frame 3c and the like at the position of the leg 14b. FIG. 9(a) is a cross-sectional view taken along line D-D. FIG. 9(b) is a cross-sectional view taken along line C-C. The cross-sections shown in FIG. 9(a) and FIG. 9(b) are both generally bilaterally symmetrical with respect to the vehicle-width wise center line Cw, and so only a left half thereof is shown in these figures. The center line Cw is the vertical line passing the vehicle-width wise center of the motorcycle 1 (see FIG. 1). In FIG. 8 and FIG. 9, horizontal line L_{H} represents the same position of the motorcycle 1 in the up-down direction.

As shown in FIG. 9(b), the rear frame 3c is generally flat at the rear end portion 3c_{E}. Letter H₁ represents a thickness of the rear frame 3c. The thickness of the rear frame 3c may be entirely the same, but may be different portion by portion. In this case, the thickness H₁ is an average thickness of the rear frame 3c. Left and right side portions of the rear frame 3c have a U-shaped cross-section. As shown in FIG. 9(a), the left and right side portions of the rear frame 3c each have a side plate 21 and a side plate 22. The side plate 21 and the side plate 22 extend generally vertically. The side plate 21 is formed vehicle-width wise outer to the side plate 22. For example, the size of the side plate 21 at the D-D cross-section in the up-down direction is represented by height H₂. The size of the side plate 21 at the C-C cross-section in the up-down direction is represented by height H₃. At the D-D cross-section, the height of the side plate 22 is greater than the height H₂ of the side plate 21. At the C-C cross-section, the side plate 22 is located vehicle-width wise inner to at the D-D cross-section. The height H₃ of the side plate 21 at the C-C cross-section is smaller than the height H₂ thereof at the D-D cross-section. The height H₃ is smaller than three times the thickness H₁. Namely, the height H₃ and the thickness H₁ have the relationship of 3H₁ > H₃. Accordingly, the rear frame 3c at the rear end portion 3c_{E} is L-shaped. As the height H₃ of the side plate 21 is smaller as compared with the thickness H₁, the rear frame 3c is flatter at the rear end portion 3c_{E}. The rear frame 3c may be generally flat or L-shaped also in a portion forward to the rear end portion 3c_{E}.

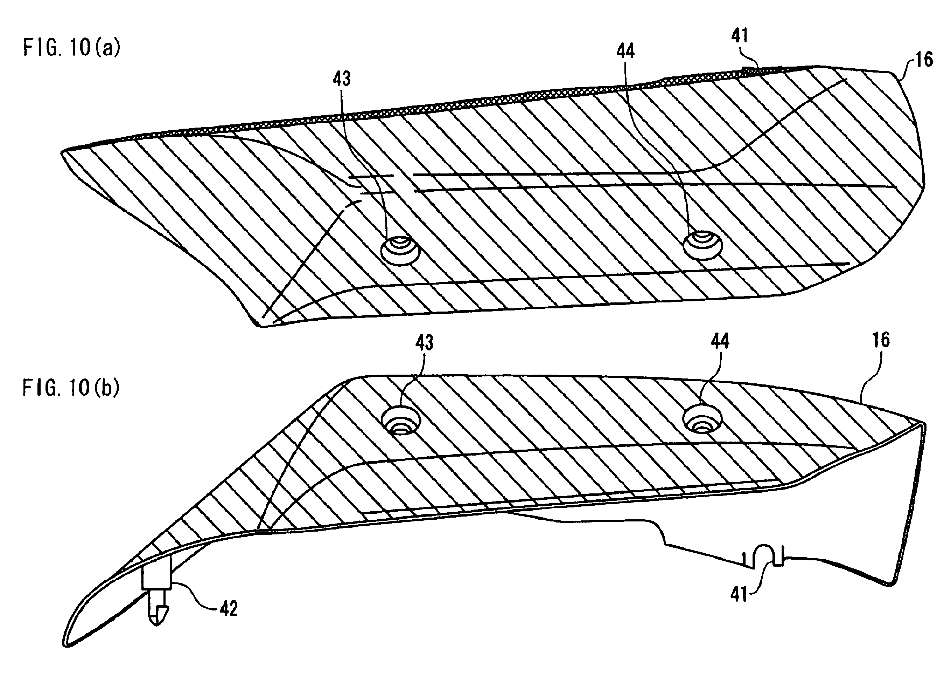

As shown in FIG. 1, the motorcycle 1 includes a pair of left and right protectors 16. The protectors 16 are provided vehicle-width wise outer to the left muffler 91 and the right muffler 92, respectively. The left and right protectors 16 partially cover the side and top of the left muffler 91 and the side and top of the right muffler 92, respectively. The protectors 16 are formed of a heat-insulating material. As shown in FIG. 10, each protector 16 has a projection 42 projecting inward. Each protector 16 also has a recess 41. The projection 42 is fit into a hole (not shown) formed in the rear cowling 2d, and a projection (not shown) provided on the rear cowling 2d is fit into the recess 41. Owing to this, the protectors 16 are fixed to the rear cowling 2d. Each protector 16 further has holes 43 and 44. As shown in FIG. 4 and the like, each muffler 91, 92 has a bracket 33. The bracket 33 is fixed to the muffler 91, 92. The bracket 33 has projections 34 and 35. By the projections 34 and 35 of the bracket 33 being fit into the holes 43 and 44, the protector 16 is fixed the muffler 91, 92. The left and right protectors 16 are generally bilaterally symmetrical with respect to the straight line passing the center of the vehicle body and extending in the front-rear direction.

As described above, a motorcycle 1 according to this embodiment includes a rear wheel 12, an exhaust pipe 8, and mufflers 91 and 92. The rear wheel 12 is swingably in the up-down direction to a vehicle body of the motorcycle 1. The exhaust pipe 8 extends toward a rear end of the vehicle body from an engine 50 provided forward to the rear wheel 12. The mufflers 91 and 92 are connected to the rear end of the exhaust pipe 8 and provided side by side in the left-right direction. Regarding the mufflers 91 and 92, a bottom end 19 of a rear end portion 9b is located at a higher level than a bottom end 18 of a front end portion 9a as seen in the side view. As seen in a plan view, each of the left and right mufflers 91, 92 includes a front portion 91c, 92c located forward to the axle C of the rear wheel 12. At least a part of the front portion 91c, 92c, overlaps the rear wheel 12 as seen in the plan view while avoiding interference with the rear wheel 12. Therefore, the width of the muffler 91, 92 can be increased while interference between the muffler 91, 92 and the rear wheel 12 is avoided. In addition, the width of the muffler 91, 92 can be increased while the muffler 91, 92 is prevented from projecting vehicle-width wise outward. This can increase the cross-sectional area of the muffler 91, 92. By increasing the cross-sectional area of the muffler 91, 92, the length of the muffler 91, 92 in the front-rear direction can be decreased. Accordingly, in the motorcycle including a pair of left and right mufflers provided above the rear wheel, the concentration of vehicle mass can be improved as compared to the conventional art.

The muffler 91, 92 in this embodiment has a generally triangular lateral cross-section. The lateral cross-section of the muffler 91, 92 has the first contour S₁ inclining vehicle-width wise outward toward a lower end thereof. The outer circumferential surface of the rear wheel 12 is formed to be convexed outward in the radial direction thereof. In other words, the rear wheel is shaped to project toward the center from the outer sides in the left-right direction. Thus, in the motorcycle 1 in this embodiment, the mufflers 91 and 92 are shaped in conformity to the cross-sectional shape of the rear wheel 12, and so the interference between the rear wheel 12 and each of the mufflers 91 and 92 can be prevented with certainty.

In this embodiment, the center position of the muffler 91, 92 in the front-rear direction is located forward to the position of the axle C of the rear wheel 12. Namely, the muffler 91, 92 is located at a relatively forward position. For this reason, in this embodiment, in the motorcycle including a pair of mufflers above the rear wheel, the concentration of vehicle mass can be improved as compared to the conventional art.

In this embodiment, the width W9b of the rear end portion 9b of the muffler 91, 92 is wider than a space between the rear end portion 9b of the left muffler 91 and the rear end portion 9b of the right muffler 92 (i.e., the minimum width W₁). The width W9a of the front end portion 9a of the muffler 91, 92 is wider than 1/2 of a space between the front end portion 9a of the left muffler 91 and the front end portion 9a of the right muffler 92 (i.e., the maximum width W₂). As can be seen from this, the left muffler 91 and the right muffler 92 each have a relatively large width. Therefore, the length of the muffler 91, 92 can be relative short, and so the position of the rear end of the muffler 91, 92 can be moved forward. Namely, in the motorcycle 1, the concentration of vehicle mass can be improved as compared to the conventional art. In addition, as seen in the plan view, a phantom line La in a direction in which the right muffler 92 extends and a phantom line Lb in a direction in which the left muffler 91 extends cross each other at a position rearward to the rear ends of the mufflers 91 and 92. Namely, the space between the front end portions of the mufflers 91 and 92 is wider than the space between the rear end portions thereof. As shown in FIG. 2 and the like, in this embodiment, when the rear wheel 12 is swung upward, a portion of each muffler 91, 92 located forward to the axle C of the rear wheel 12 is likely to interfere with the rear wheel 12. However, as described above, the space between the front end portions of the mufflers 91 and 92 is wider than the space between the rear end portions thereof. Therefore, the interference between the front end portion 9a and the rear wheel 12 is prevented with certainty.

As shown in FIG. 3, as seen in the side view, the center position L₂ of the muffler 91, 92 in the front-rear direction is forward to the center position L₃ of the rear seat 14 in the front-rear direction. Namely, the muffler 91, 92 is located at a relatively forward position in the vehicle body as compared to the conventional art. Therefore, in the motorcycle including a pair of left and right mufflers provided above the rear wheel, the concentration of vehicle mass can be improved as compared to the conventional art.

As shown in FIG. 3, the center position L₈ of the taillight 17 in the front-rear direction is forward to the rear end L₅ of the rear seat 14. The rear end L₄ of the muffler 91, 92 is forward to the rear end L₅ of the rear seat 14. The rear end L₆ of the taillight 17 is forward to the rear end L₅ of the rear seat 14. In addition, the front end L₇ of the taillight 17 is forward to the rear end L₄ of the muffler 91, 92. Namely, the mufflers 91 and 92 and the taillight 17 are located at a relatively forward position in the vehicle body as compared to the conventional art. Because the rear end of the taillight 17 is located at a relatively forward position, the damage of the surface of the taillight 17 due to the exhaust gas from the mufflers 91 and 92 is suppressed.

The motorcycle 1 in this embodiment includes protectors 16. As described above, the mufflers 91 and 92 are located at a relatively forward position in this embodiment. Therefore, a passenger sitting on the rear seat 14 is likely to receive the heat from the mufflers 91 and 92 at his/her feet. However, because the motorcycle 1 in this embodiment includes the protectors 16, the passenger sitting on the rear seat 14 is protected against receiving the heat from the mufflers 91 and 92 at his/her feet.

The motorcycle 1 in this embodiment includes a rear frame 3c. At least a part of the rear portion of the rear frame 3c is located above the rear wheel 12. The rear frame 3c supports the mufflers 91 and 92. As shown in FIG. 9, a part of the rear portion of the rear frame 3c has a generally flat cross-section. Owing to this, a space is provided above the rear wheel 12. In the case where the rear frame 3c can support the mufflers 91 and 92 at a higher level, the interference between the rear wheel 12 and the muffler 91, and 92 is prevented more. Because the space is provided between the rear wheel 12 and the rear frame 3c, the taillight 17 and other elements can be located in a compact manner.

According to this embodiment, the motorcycle 1 is a so-called racer replica-type motorcycle. However, the motorcycle 1 according to this embodiment is not limited to a racer replica-type motorcycle, and may be a so-called sports-type motorcycle, a scooter-type motorcycle, or the like.

The description above discloses (among others) an embodiment of a motorcycle, comprising: a rear wheel having an axle and provided swingably to a vehicle body; an exhaust pipe extending rearward from an engine provided forward to the rear wheel; and a pair of mufflers connected to a rear end of the exhaust pipe and provided side by side in a left-right direction; wherein: each of the pair of mufflers inclines obliquely upward and rearward, such that a bottom end of a rear end portion is located at a higher level than a bottom end of a front end portion thereof; and as seen in a plan view, each muffler includes a front portion located forward to the axle, and at least a part of the front portion overlaps the rear wheel.

Preferably, the rear wheel has a convexed outer circumferential surface; each muffler has a generally triangular lateral cross-section; and a surface of each muffler facing the rear wheel is slanted with respect to a vertical direction to incline vehicle-width wise outward toward a bottom end thereof.

Further preferably, a center position of each muffler in a front-rear direction is located forward to the position of the axle.

Further preferably, a width of the rear end portion of each muffler is wider than a space between the rear end portion of the left muffler and the rear end portion of the right muffler.

Further preferably, a width of the front end portion of each muffler is wider than 1/2 of a space between the front end portion of the left muffler and the front end portion of the right muffler.

Further preferably, a phantom line in a direction in which the right muffler extends and a phantom line in a direction in which the left muffler extends cross each other at a position rearward to the rear ends of the mufflers.

Preferably, the motorcycle further comprises a rear frame for supporting the mufflers, at least a part of a rear portion of the rear frame being located above the rear wheel; and a rear seat provided above the rear frame; wherein a center position of the mufflers in a front-rear direction is located forward to a center position of the rear seat in the front-rear direction.

Preferably, the motorcycle further comprises a taillight provided below the rear seat, at least a part of the taillight overlapping the rear end portion of each muffler as seen in a side view; wherein: the rear end of each muffler is located forward to a rear end of the rear seat; a rear end of the taillight is located forward to the rear end of the rear seat; a front end of the taillight is located forward to the rear end of each muffler.

Preferably, the motorcycle further comprises protectors each provided vehicle-width wise outer to the corresponding muffler for partially covering a side portion or a top portion of the corresponding muffler.

Preferably, the motorcycle further comprises a rear frame for supporting the mufflers, at least a part of a rear portion of the rear frame being located above the rear wheel; and a part of the rear portion of the rear frame is generally flat.

In particular, in a motorcycle including a pair of left and right mufflers provided above a rear wheel, the vehicle mass is more concentrated than in the conventional art. The motor cycle includes a rear wheel 12 provided swingably to a vehicle body; an exhaust pipe 8 extending rearward from an engine provided forward to the rear wheel 12; and a left muffler 91 and a right muffler 92 connected to a rear end of the exhaust pipe 8 and provided side by side in a left-right direction. The mufflers 91 and 92 incline obliquely upward and rearward. As seen in the plan view, at least a part of a front portion 91c, 92c of the muffler 91, 92 is located at a position overlapping the rear wheel 12

## Claims

1. Motorcycle comprising:
a vehicle body by which a rear wheel (12) having an axle (C) is swingably supported;
an engine (50) provided in a motorcycle moving direction forward of the rear wheel (12), wherein an exhaust pipe (8) extends in the motorcycle moving direction rearward from said engine (50); and
at least one muffler (91,92) connected to a rear end of the exhaust pipe (8), wherein
the at least one muffler (91,92) is inclined obliquely upward and rearward such that a bottom end (19) of a rear end portion (9b) of said at least one muffler (91,92) is located at a higher level than a bottom end (18) of a front end portion (9a) of said at least one muffler (91,92),
and as seen in a plan view, the at least one muffler (91,92) includes a front portion (91c,92c) located in the motorcycle moving direction forward of the axle (C), a center position (L₂) of the at least one muffler (91,92) is located in the motorcycle moving direction forward of the axle (C), and at least a part of said front portion (91c,92c) overlaps a part of the rear wheel (12), wherein the rear wheel (12) has a outward convex outer circumferential surface in a radial direction of the rear wheel (12), and
the at least one muffler (91,92) has a generally triangular lateral cross-section in a direction perpendicular to a longitudinal direction of the at least one muffler, wherein a surface (S₁) of the at least one muffler (91,92) facing the rear wheel (12) is slanted in a width direction of the motorcycle outward toward a bottom end of the at least one muffler (91,92),
wherein a rear frame (3c) supports the at least one muffler (91,92), at least a part of a rear portion of the rear frame (3c) is located above the rear wheel (12), a part of a front seat (13) is placed on the rear frame (3c), a rear seat (14) is provided rearward to the front seat (13), the rear seat (14) is provided above the rear frame (3c), and a center position (L₂) of the at least one muffler (91,92) is located in the motorcycle moving direction forward of a center position (L₃) of the rear seat (14).

2. Motorcycle according to claim 1, wherein a pair of mufflers (91,92) is connected to the rear end of the exhaust pipe (8) and is provided side by side in the width direction of the motorcycle, wherein each of said left and right mufflers (91,92) is inclined obliquely upward and rearward such that the bottom end (19) of the rear end portion (9b) of each muffler (91,92) is located at a higher level than the bottom end (18) of the front end portion (9a) of each muffler, and as seen in the plan view, each muffler (91,92) includes a front portion (91c,92c) located in the motorcycle moving direction forward of the axle (C), and at least a part of each front portion (91c,92c) overlaps a part of the rear wheel (12).

3. Motorcycle according to claim 2, wherein a width (W9b) of the rear end portion (9b) of each muffler (91,92) is wider than a space between the rear end portion (9b) of the left muffler (91) and the rear end portion (9b) of the right muffler (92).

4. Motorcycle according to at least one of claims 2 to 3, wherein a width (W9a) of the front end portion (9a) of each muffler (91,92) is wider than 1/2 of a space between the front end portion (9a) of the left muffler (91) and the front end portion (9a) of the right muffler (92).

5. Motorcycle according to at least one of claims 2 to 4, wherein a phantom line (La) in a direction in which the right muffler (92) extends and a phantom line (Lb) in a direction in which the left muffler (91) extends cross each other at a position in the motorcycle moving direction rearward of the rear ends of the mufflers (91,92).

6. Motorcycle according to at least one of claims 1 to 5, wherein a taillight (17) is provided below the rear seat (14), at least a part of the taillight (17) overlaps the rear end portion (9b) of the at least one muffler (91,92) as seen in a side view, the rear end of the at least one muffler (91,92) is located in the motorcycle moving direction forward of a rear end (L₅) of the rear seat (14), and/or a rear end (L₆) of the taillight (17) is located in the motorcycle moving direction forward of the rear end (L₅) of the rear seat (14), and/or a front end (L₇) of the taillight (17) is located in the motorcycle moving direction forward of the rear end of the at least one muffler (14).

7. Motorcycle according to at least one of claims 2 to 6, wherein a protector (16) is provided in the width direction of the motorcycle outward of the corresponding muffler (91,92) so as to partially cover a side portion and/or a top portion of the corresponding muffler (91,92).

8. Motorcycle according to at least one of claims 1 to 7, wherein a rear frame (3c) supports the at least one muffler (91,92), at least a part of a rear portion of the rear frame (3c) is located above the rear wheel (12), and a part of the rear portion of the rear frame (3c) is generally flat.

## Patentansprüche

1. Motorrad, aufweisend:
eine Fahrzeugkarosserie, durch die ein Hinterrad (12), das eine Achse (C) hat, schwingbar gelagert ist;
eine Brennkraftmaschine (50), vorgesehen in einer Motorrad- Bewegungsrichtung vor dem Hinterrad (12), wobei sich ein Abgasrohr (8) in der Motorrad- Bewegungsrichtung von der Brennkraftmaschine (50) nach rückwärts erstreckt; und
zumindest einen Schalldämpfer (91, 92), verbunden mit einem hinteren Ende des Abgasrohres (8), wobei
der zumindest eine Schalldämpfer (91, 92) schräg nach oben und nach hinten derart geneigt ist, dass ein Bodenende (19) des hinteren Abschnittes (9b) des zumindest einen Schalldämpfers (91, 92) auf einem höheren Niveau als das Bodenende (19) eines vorderen Endabschnittes (9a) des Schalldämpfers (91, 92) angeordnet ist, und, wenn in einer Draufsicht gesehen, der zumindest eine Schalldämpfer (91, 92) einen vorderen Abschnitt (91c, 92c) enthält, angeordnet in der Motorrad- Bewegungsrichtung vor der Achse (C), wobei eine mittlere Position (L₂) des zumindest einen Schalldämpfers (91, 92) in der Motorrad- Bewegungsrichtung nach vor der Achse (C) angeordnet ist und zumindest ein Teil des vorderen Abschnittes (91c, 92c) einen Teil des Hinterrades (12) überlappt, wobei das Hinterrad (12) eine nach außen konvexe äußere Umfangsoberfläche in einer radialen Richtung des Hinterrades (12) hat, und der zumindest einen Schalldämpfer (91, 92) hat einen im Wesentlichen dreieckigen seitlichen Querschnitt in einer Richtung rechtwinklig zu einer Längsrichtung des zumindest einen Schalldämpfers (91, 92), wobei eine Oberfläche (S₁) des zumindest einen Schalldämpfers (91, 92), die dem Hinterrad (12) zugewandt ist, in Richtung der Breite des Motorrades nach außen in Richtung zu einem Bodenende des zumindest einen Schalldämpfers (91, 92) verjüngt ist,
wobei ein hinterer Rahmen (3c) den zumindest einen Schalldämpfer (91, 92) trägt, wobei zumindest ein Teil eines hinteren Rahmens (3c) oberhalb des Hinterrades (12) angeordnet ist, ein Teil eines vorderen Sitzes (13) auf dem hinteren Rahmen (3c) platziert ist, ein hinterer Sitz (14) hinter dem vorderen Sitz (13) vorgesehen ist, der hintere Sitz (14) oberhalb des hinteren Rahmens (3c) vorgesehen ist und eine mittlere Position (L₂) des Schalldämpfers (91, 92) in der Motorrad- Bewegungsrichtung nach vor der mittleren Position (L₂) des hinteren Sitzes (14) angeordnet ist,

2. Motorrad nach Anspruch 1, wobei ein Paar der Schalldämpfer (91, 92) mit dem hinteren Ende des Abgasrohres (8) verbunden ist und nebeneinander in der Richtung der Breite des Motorrades angeordnet ist, wobei jeder der linken und rechten Schalldämpfer (91, 92) schräg nach oben und nach hinten derart geneigt ist, dass das Bodenende (19) des hinteren Endabschnittes (9b) von jedem Schalldämpfer (91, 92) auf einem höheren Niveau als das Bodenende (18) des vorderen Endabschnittes (9a) von jedem Schalldämpfer angeordnet ist, und, wenn gesehen in der Draufsicht, jeder Schalldämpfer (91, 92) einen vorderen Abschnitt (91c, 92c) enthält, angeordnet in der Motorrad- Bewegungsrichtung nach vor der Achse (C), und zumindest ein Teil von jedem vorderen Abschnitt (91c, 92c) einen Teil des Hinterrades (12) überlappt.

3. Motorrad nach Anspruch 2, wobei eine Breite (W9b) des hinteren Endabschnittes (9b) jedes Schalldämpfers (91, 92) breiter als ein Raum zwischen dem hinteren Endabschnitt (9b) des linken Schalldämpfers (91, 92) und des hinteren Endabschnittes (9b) des rechten Schalldämpfers (91, 92) ist.

4. Motorrad nach zumindest einem der Ansprüche 2 bis 3, wobei eine Breite (W9a) des vorderen Endabschnittes (9a) von jedem Schalldämpfer (91, 92) breiter als ½ eines Raumes zwischen dem vorderen Endabschnitt (9a) des rechten Schalldämpfers (92) ist.

5. Motorrad nach zumindest einem der Ansprüche 2 bis 4, wobei eine gedachte Linie (La) in einer Richtung, in der sich der rechte Schalldämpfer (92) erstreckt, und eine gedachte Linie (Lb) in einer Richtung, in der sich der linke Schalldämpfer (91) erstreckt, einander an einer Position in der Motorrad- Bewegungsrichtung hinter dem hinteren Ende der Schalldämpfer (91, 92) kreuzen.

6. Motorrad nach zumindest einem der Ansprüche 1 bis 5, wobei ein Rücklicht (17) unter dem hinteren Sitz (14) vorgesehen ist, zumindest ein Teil des Rücklichtes (17) den hinteren Endabschnitt (9b) des zumindest einen Schalldämpfers (91, 92) überlappt, wenn in einer Seitenansicht gesehen, wobei das hintere Ende des zumindest einen Schalldämpfers (91, 92) in der Motorrad- Bewegungsrichtung nach vor einem hinteren Ende (L₅) des hinteren Sitzes (14) und / oder einem hinteren Ende (L₆) des Rücklichtes (17) in der Motorrad- Bewegungsrichtung vor dem hinteren Ende (L₅) des hinteren Sitzes (14) angeordnet ist, und / oder einem vorderen Ende (L₇) des Rücklichtes (17) in der Motorrad- Bewegungsrichtung vor dem hinteren Ende des zumindest einen Schalldämpfers (91, 92) angeordnet ist.

7. Motorrad nach zumindest einem der Ansprüche 2 bis 6, wobei ein Schutz (16) in der Richtung der Breite des Motorrades nach außen des entsprechenden Schalldämpfers (91, 92) vorgesehen ist, um teilweise einen Seitenabschnitt und / oder einen oberen Abschnitt des entsprechenden Schalldämpfers (91, 92) abzudecken.

8. Motorrad nach zumindest einem der Ansprüche 1 bis 7, wobei ein hinterer Rahmen (3c) den zumindest einen Schalldämpfer (91, 92) trägt, zumindest ein Teil eines hinteren Abschnittes des hinteren Rahmens (3c) oberhalb des Hinterrades (12) angeordnet ist und ein Teil des hinteren Abschnittes des hinteren Rahmens (3c) im Wesentlich flach ist.

## Revendications

1. Motocycle comprenant :
un corps de véhicule par lequel une roue arrière (12) avec un axe (C) est supportée de manière oscillante ;
un moteur (50) prévu à l'avant de la roue arrière (12), dans le sens de déplacement du motocycle, étant précisé qu'un tuyau d'échappement (8) s'étend vers l'arrière à partir du moteur (50), dans le sens de déplacement du motocycle ; et
au moins un pot d'échappement (91, 92) relié à une extrémité arrière du tuyau d'échappement (8),
étant précisé que le ou les pots d'échappement (91, 92) sont inclinés vers le haut et vers l'arrière de telle sorte qu'une extrémité inférieure (19) d'une partie d'extrémité arrière (9b) du ou des pots d'échappement (91, 92) se trouve plus haut qu'une extrémité inférieure (18) d'une partie d'extrémité avant (9a) du ou des pots d'échappement (91, 92), et que vus en plan, le ou les pots d'échappement (91, 92) comprennent une partie avant (91c, 92c) qui se trouve à l'avant de l'axe (C), dans le sens de déplacement du motocycle, qu'une position centrale (L₂) du ou des pots d'échappement (91, 92) se trouve à l'avant de l'axe (C), dans le sens de déplacement du motocycle, et qu'une partie au moins de la partie avant (91c, 92c) couvre une partie de la roue arrière (12), étant précisé que la roue arrière (12) a une surface circonférentielle extérieure convexe vers l'extérieur, dans un sens radial de la roue arrière (12), et
que le ou les pots d'échappement (91, 92) ont une section transversale latérale globalement triangulaire dans un sens perpendiculaire à un sens longitudinal du ou des pots d'échappement, étant précisé qu'une surface (S₁) du ou des pots d'échappement (91, 92) qui fait face à la roue arrière (12) est inclinée dans le sens de la largeur du motocycle, vers l'extérieur en direction d'une extrémité inférieure du ou des pots d'échappement (91, 92),
et qu'un châssis arrière (3c) supporte le ou les pots d'échappement (91, 92), qu'une partie au moins d'une partie arrière du châssis arrière (3c) se trouve au-dessus de la roue arrière (12), qu'une partie d'un siège avant (13) est placée sur le châssis arrière (3c), qu'un siège arrière (14) est disposé à l'arrière du siège avant (13), que le siège arrière (4) est disposé au-dessus du châssis arrière (3c), et qu'une position centrale (L₂) du ou des pots d'échappement (91, 92) se trouve à l'avant d'une position centrale (L₃), dans le sens de déplacement du motocycle, du siège arrière (14).

2. Motocycle selon la revendication 1, étant précisé que deux pots d'échappement (91, 92) sont reliés à l'extrémité arrière du tuyau d'échappement (8) et sont disposés côte à côte dans le sens de la largeur du motocycle, étant précisé que chacun des pots d'échappement gauche et droit (91, 92) est incliné vers le haut et vers l'arrière de telle sorte que l'extrémité inférieure (19) de la partie d'extrémité arrière (9b) de chaque pot d'échappement (91, 92) se trouve plus haut que l'extrémité inférieure (18) de la partie d'extrémité avant (9a) de chaque pot d'échappement, et que vu de dessus, chaque pot d'échappement (91, 92) comprend une partie avant (91c, 92c) qui se trouve à l'avant de l'axe (C), dans le sens de déplacement du motocycle, et qu'une partie au moins de chaque partie avant (91c, 92c) couvre une partie de la roue arrière (12).

3. Motocycle selon la revendication 2, étant précisé qu'une largeur (W9b) de la partie d'extrémité arrière (9b) de chaque pot d'échappement (91, 92) est plus large qu'un espace entre la partie d'extrémité arrière (9b) du pot d'échappement gauche (91) et la partie d'extrémité arrière (9b) du pot d'échappement droit (92).

4. Motocycle selon l'une au moins des revendications 2 à 3, étant précisé qu'une largeur (W9a) de la partie d'extrémité avant (9a) de chaque pot d'échappement (91, 92) est plus large que la moitié d'un espace entre la partie d'extrémité avant (9a) du pot d'échappement gauche (91) et la partie d'extrémité avant (9a) du pot d'échappement droit (92).

5. Motocycle selon l'une au moins des revendications 2 à 4, étant précisé qu'une ligne en traits et points (La) dans un sens dans lequel s'étend le pot d'échappement droit (92) et une ligne en traits et points (Lb) dans lequel s'étend le pot d'échappement gauche (91) se croisent à un endroit qui se trouve en arrière des extrémités arrière des pots d'échappement (91, 92), dans le sens de déplacement du motocycle.

6. Motocycle selon l'une au moins des revendications 1 à 5, étant précisé qu'un feu arrière (17) est prévu au-dessous du siège arrière (14), qu'une partie au moins du feu arrière (17) couvre la partie d'extrémité arrière (9b) du pot d'échappement (91, 92), vu de côté, que l'extrémité arrière du ou des pots d'échappement (91, 92) se trouve à l'avant d'une extrémité arrière (L₅) du siège arrière (14), dans le sens de déplacement du motocycle, et/ou qu'une extrémité arrière (L₆) du feu arrière (17) se trouve à l'avant de l'extrémité arrière (L₅) du siège arrière (14), dans le sens de déplacement du motocycle, et/ou qu'une extrémité avant (L₇) du feu arrière (17) se trouve à l'avant de l'extrémité arrière du ou des pots d'échappement (91, 92), dans le sens de déplacement du motocycle.

7. Motocycle selon l'une au moins des revendications 2 à 6, étant précisé qu'une protection (16) est disposée vers l'extérieur du pot d'échappement (91, 92) correspondant, dans le sens de la largeur du motocycle, de manière à couvrir partiellement une partie latérale et/ou une partie supérieure du pot d'échappement (91, 92) correspondant.

8. Motocycle selon l'une au moins des revendications 1 à 7, étant précisé qu'un châssis arrière (3c) supporte le ou les pots d'échappement (91, 92), qu'une partie au moins d'une partie arrière du châssis arrière (3c) se trouve au-dessus de la roue arrière (12), et qu'une partie de la partie arrière du châssis arrière (3c) est globalement plate.
